Europäisches Patentamt

European Patent Office

Office européen des brevets

(19)

(11) Numéro de publication : **0 338 942 B1**

# (12) FASCICULE DE BREVET EUROPEEN

(45) Date de publication du fascicule du brevet :
08.05.91 Bulletin 91/19

(51) Int. Cl.⁵ : **F16L 37/28**

(21) Numéro de dépôt : 89420026.0

(22) Date de dépôt : 31.01.89

(54) Coupleur à clapets à douille extérieure mobile.

(30) Priorité : 20.04.88 FR 8805712

(43) Date de publication de la demande :
25.10.89 Bulletin 89/43

(45) Mention de la délivrance du brevet :
08.05.91 Bulletin 91/19

(84) Etats contractants désignés :
AT BE CH DE ES GB GR IT LI LU NL SE

(56) Documents cités :
EP-A- 0 096 649
EP-A- 0 184 702
DE-A- 3 015 601
DE-B- 2 854 511
FR-A- 2 384 196

(73) Titulaire : PARKER HANNIFIN RAK S.A.
Zone Industrielle du Mont-Blanc Ville la Grand
F-74100 Annemasse (FR)

(72) Inventeur : Hanus, Jean-Nicolas
La Tannerie Nernier
F-74140 Douvaine (FR)
Inventeur : Anthoine, Bernard
41 rue des Maraîchers Ambilly
F-74100 Annemasse (FR)

(74) Mandataire : Maureau, Pierre et al
Cabinet GERMAIN & MAUREAU B.P. 3011
F-69392 Lyon Cédex 03 (FR)

EP 0 338 942 B1

## Description

La présente invention concerne un coupleur à clapets à douille extérieure mobile à double action, c'est-à-dire du type comportant deux éléments mâle et femelle dont chacun possède un clapet, dont l'élément mâle est pourvu de moyens de raccordement à un circuit d'utilisation et dont l'élément femelle, qui est pourvu de moyens de raccordement à un circuit d'alimentation en fluide sous pression, porte une douille extérieure axialement mobile dans les deux sens et présentant une nervure interne biconique qui, en position d'équilibre de la douille, c'est-à-dire en position de repos ou de fonctionnement du coupleur, agit radialement sur une rangée annulaire de billes de verrouillage pour les maintenir dans leur position radiale la plus interne dans laquelle, étant en saillie à l'intérieur de l'alésage de l'élément femelle, elles sont susceptibles d'être engagées dans une gorge annulaire de l'élément mâle lorsque lui-même est engagé dans l'alésage de l'élément femelle, chaque clapet étant pourvu d'un ressort de rappel en position de fermeture et d'une butée limitant sa course d'ouverture à la moitié de la course d'engagement de l'élément mâle dans l'élément femelle.

Une manoeuvre dans un sens ou dans l'autre de la douille extérieure permet, en libérant les billes de verrouillage, de retirer l'élément mâle de l'élément femelle ou de l'y engager et, lors de cet engagement, les deux clapets prennent appui l'un contre l'autre et se soulèvent réciproquement de leurs sièges jusqu'à atteindre, en fin d'engagement, leurs positions d'ouverture totale dans laquelle chacun d'eux est en appui contre sa butée de fin de course d'ouverture.

Normalement, le fluide s'écoule de l'élément femelle vers l'élément mâle et, par mesure de sécurité, lors d'un couplage, le circuit d'alimentation doit être maintenu fermé jusqu'au verrouillage de l'accouplement et, pour qu'il soit toujours possible de réaliser le couplage avant ouverture du circuit d'alimentation et malgré l'existence éventuelle, dans le circuit d'utilisation, c'est-à-dire du côté de l'élément mâle, d'une pression résiduelle apte à s'opposer à l'ouverture du clapet de l'élément mâle, dans certains coupleurs, la butée associée au clapet de l'élément femelle, c'est-à-dire situé du côté de l'alimentation, est agencée de manière à, d'une part, s'escamoter automatiquement lors du couplage pour lui permettre d'effectuer une course d'ouverture égale au double de sa course normale et, d'autre part, à être automatiquement ramenée en position active lors de l'ouverture du circuit d'alimentation, après verrouillage de l'élément mâle dans l'élément femelle.

Le retour en position active de la butée escamotable lors de l'ouverture du circuit d'alimentation est indispensable pour permettre un fonctionnement stable du coupleur car une inversion du sens de circulation du fluide provoquerait inévitablement la fermeture du clapet de l'élément mâle et s'opposerait à cette inversion. Or, une telle inversion est obligatoire dans de nombreux circuits tels que les circuits de commande des vérins hydrauliques ou encore des moteurs hydrauliques à inversion de sens de rotation.

On connaît, notamment par le brevet français 2 384 196, un tel coupleur dans lequel la tige du clapet de l'élément femelle, c'est-à-dire situé du côté de l'alimentation, présente, du côté de son extrémité libre et au-delà d'un premier tronçon dont la longueur correspond à sa course normale d'ouverture, un second tronçon de plus petit diamètre, limité, du côté de la tête du clapet ; par un épaulement destiné à constituer le cran d'appui contre la butée escamotable en position active et, de l'autre, par une collerette, sur lequel est montée une bague coulissante mobile axialement entre l'épaulement et la collerette et dont la longueur est sensiblement égale à la course normale d'ouverture de ce clapet augmentée de la longueur de la bague coulissante, tandis que la butée escamotable est constituée par un organe constamment poussé radialement en direction de la tige du clapet par des moyens à ressort et qui, en position de fermeture du clapet, est en appui contre la bague, elle-même en appui contre la collerette. Cependant, si, lors de l'accouplement des éléments mâle et femelle de ce coupleur, il ne subsiste aucune pression résiduelle dans le circuit d'alimentation, les deux clapets se repoussent mutuellement en position normale d'ouverture sans que le clapet de l'élément femelle n'effectue une course double de sa course normale d'ouverture et, dans ce cas, la bague coulissante reste au contact de la butée escamotable qui, de ce fait, ne peut pas revenir en position active. Il en résulte que, lors de la première inversion du sens de circulation du fluide, le clapet de l'élément femelle, dont la butée est demeurée escamotée, pourra reculer sous la poussée du clapet de l'élément mâle qui pourra se fermer et ainsi s'opposer à cette inversion.

Ce coupleur ne peut donc être utilisé dans une installation à double sens de circulation du fluide que si l'on est assuré qu'il subsiste toujours une pression résiduelle dans le circuit d'utilisation.

La présente invention vise à remédier à ces inconvénients. A cet effet, elle concerne un coupleur du dernier type cité dans lequel la butée escamotable associée au clapet de l'élément femelle, c'est-à-dire situé du côté de l'alimentation, est constituée par un ressort en forme d'agrafe dont les branches sont engagées sur la tige du clapet de manière à la serrer constamment entre deux zones diamétralement opposées tandis que la bague coulissante présente, à son extrémité tournée du côté de la collerette, un segment cylindrique de diamètre supérieur à celui du premier tronçon de la tige du clapet et entre son extrémité destinée à entrer en contact avec l'épaulement de la tige et ce segment cylindrique, un segment tronconique dont le petit diamètre est égal au diamètre du

3 EP 0 338 942 B1 4

premier tronçon de la tige et qui est destiné à être situé entre les branches de l'agrafe lorsque la bague est en appui contre l'épaulement de la tige du clapet et que ce dernier est en position normale d'ouverture, tandis que le segment cylindrique de la bague est destiné à être situé entre les branches précitées lorsque la bague coulissante est en appui contre la collerette du clapet et que ce dernier est en position de fermeture.

Grâce à cette disposition, lorsque l'accouplement des deux éléments du coupleur est réalisé sans pression résiduelle du côté utilisation, les deux clapets s'ouvrent mutuellement et simultanément de sorte que le clapet de l'élément femelle, c'est-à-dire situé du côté de l'alimentation, effectue une course à la fin de laquelle l'épaulement de sa tige entre en contact avec l'extrémité correspondante de la bague coulissante et la repousse jusqu'à ce que le segment tronconique de cette dernière soit situé entre les branches de l'agrafe dont la force de serrage a pour effet de chasser la bague en direction de la collerette de la tige du clapet et, par suite de leur venue en contact avec le second tronçon de la tige du clapet, la mise en position active des branches de l'agrafe derrière l'épaulement de cette tige.

Suivant une forme d'exécution simple de l'invention, la tige du clapet de l'élément femelle, c'est-à-dire situé du côté de l'alimentation, et sa bague coulissante sont montées coulissantes axialement dans un manchon fixe solidaire du corps du coupleur et présentant, à l'emplacement prévu pour les branches de l'agrafe, deux lumières traversantes diamétralement opposées, la liaison rigide entre ce manchon et le corps du coupleur étant assurée par un couronne d'ailettes radiales entre lesquelles le fluide sous pression peut librement circuler.

De toute façon, l'invention sera bien comprise à l'aide de la description qui suit, en référence au dessin schématique annexé représentant, à titre d'exemple non limitatif, une forme d'exécution de ce coupleur :

Figure 1 est une vue en demi-coupe axiale de l'élément femelle seul, c'est-à-dire de l'élément situé du côté de l'alimentation ;

Figure 2 est une vue similaire à figure 1 montrant l'élément mâle, c'est-à-dire l'élément situé du côté du circuit d'utilisation, partiellement engagé dans l'élément femelle ;

Figure 3 est une vue similaire aux figures 1 et 2 montrant le coupleur après accouplement de ses deux éléments, dans le cas ou il subsiste une pression résiduelle dans le circuit d'utilisation ;

Figure 4 est une vue similaire à figure 3 montrant le coupleur en position d'utilisation, c'est-à-dire après ouverture du circuit d'alimentation ;

Figure 5 est une vue similaire à figure 4 montrant le coupleur lors du début d'une opération de désaccouplement, c'est-à-dire du retrait de l'élément mâle par rapport à l'élément femelle ;

Figure 6 est une vue similaire à figure 3 montrant les deux éléments assemblés du coupleur lorsque l'accouplement est réalisé en l'absence de pression résiduelle dans le circuit d'utilisation.

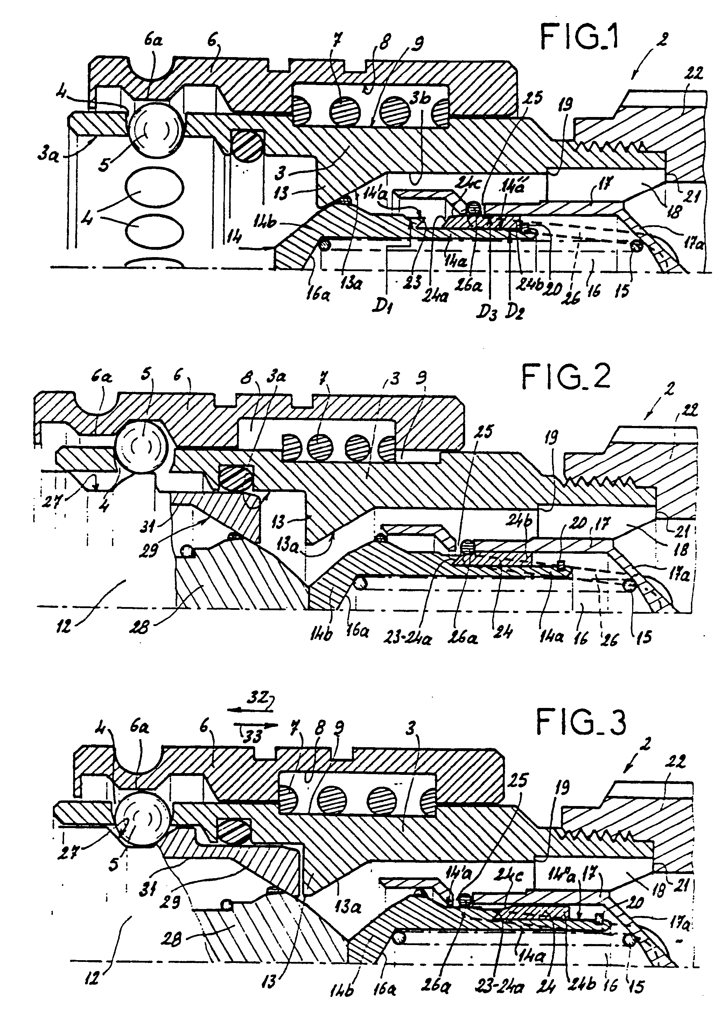

Le coupleur selon l'invention est du type à clapets et à douille extérieure mobile à double action. L'élément femelle 2 de ce coupleur, tel qu'illustré sur la figure 1, comporte un corps tubulaire central 3 destiné à être fixé rigidement à un raccord mâle ou femelle d'un élément d'un circuit de distribution tel qu'un distributeur ou autre similaire, non représenté sur le dessin. Ce corps tubulaire 3 présente, du côté de son extrémité d'accouplement, c'est-à-dire du côté de son extrémité opposée à celle prévue pour son raccordement au circuit d'alimentation, un alésage 3a constituant l'embout femelle de cet élément et destiné à recevoir, loger et retenir l'embout de l'élément mâle 12. Au droit de cet alésage 3a, le corps tubulaire 3 présente une rangée annulaire de trous traversants 4 dont chacun, qui présente une extrémité intérieure de plus petit diamètre que son extrémité extérieure, est destiné à loger, tout en la retenant, une bille de verrouillage 5. Les billes 5 sont normalement maintenues dans leur position la plus interne radialement, c'est-a-dire en appui contre l'extrémité intérieure leur servant de siège du trou 4 correspondant, par une nervure intérieure 6a prévue, à cet effet, dans l'alésage d'une douille extérieure mobile 6 et qui est normalement maintenue dans la position dans laquelle elle entoure les billes 5 par un ressort hélicoïdal 7 agissant simultanément sur des épaulements ménagés, à cet effet, aux extrémités de deux chambres annulaires 8 et 9 ménagées dans l'alésage de la douille 6 et à la périphérie du corps tubulaire 3.

Un déplacement axial dans un sens ou dans l'autre de la douille extérieure mobile 6 permet de décaler la nervure 6a par rapport à la rangée de billes 5 et de libérer ces dernières de toute contrainte radiale, ce qui autorise évidemment leur déplacement radial en direction de l'extérieur.

L'élément tubulaire 3 présente en outre, à l'extrémité intérieure de l'alésage 3a prévu pour recevoir l'embout de l'élément mâle 12, une saillie annulaire intérieure 13 dont la face 13a opposée à l'alésage 3a est inclinée pour servir de siège au clapet 14 associé à l'élément femelle 2 et qui est normalement maintenu en position de fermeture par un ressort de rappel hélicoïdal 15 prenant appui, d'une part, contre le fond 16a d'un alésage 16 ménagé dans la tige 14a du clapet 14 et coaxialement à cette tige et, d'autre part, contre le fond 17a d'un manchon cylindrique 17 destiné à servir de guide à la tige 14a du clapet 14 et qui est fixé, par l'intermédiaire d'ailettes radiales 18 dont il est solidaire, au corps tubulaire 3 de l'élément femelle 2.

Dans l'exemple illustré sur le dessin, cette fixation est assurée par engagement et serrage des extrémités radialement extérieures des ailettes 18 entre deux épaulements 19 et 21 se faisant vis-à-vis

3

dont l'un 19 est aménagé dans un prolongement 3b au-delà du siège 13a de l'alésage 3a du corps tubulaire 3 et dont l'autre 21 est aménagé dans un écrou d'assemblage 22 vissé sur l'extrémité correspondante du corps tubulaire 3.

Comme le montre le dessin, la tige 14a du clapet 14 présente, en partant de sa tête 14b, un premier tronçon 14'a d'un diamètre extérieur D1, suivi d'un prolongement constituant un second tronçon 14"a, d'un diamètre D2 plus petit que le diamètre D1 du premier tronçon 14'a dont il est séparé par un épaulement 23. Sur le tronçon 14"a de la tige 14a le plus éloigné de la tête 14b est montée axialement coulissante une bague 24 dont le diamètre extérieur D3 est supérieur au diamètre D1 du tronçon 14'a de la tige 14a du clapet 14. Cette bague 24, dont la longueur est inférieure à celle du tronçon 14"a de la tige 14a du clapet 14, est retenue prisonnière sur cette dernière par une collerette 20 prévue à l'extrémité postérieure de la tige 14a du clapet 14 et qui est ici constituée par un circlips. La bague 24 est donc mobile axialement entre l'épaulement 23 et la collerette 20.

Pour des raisons qui seront expliquées par la suite, à son extrémité située du côté de l'épaulement 23, la bague 24 présente un segment tronconique convergeant en direction de la tête 14b du clapet 14 et l'épaulement 23 présente un profil complémentaire lui permettant d'épouser parfaitement l'extrémité tronconique 24a de la bague 24.

Enfin, pour des raisons expliquées ultérieurement, entre son segment tronconique 24a et son segment postérieur cylindrique 24b de diamètre D3, la bague 24 présente un segment tronconique 24c assurant une continuité de surface entre son segment postérieur 24b et son segment tronconique 24a.

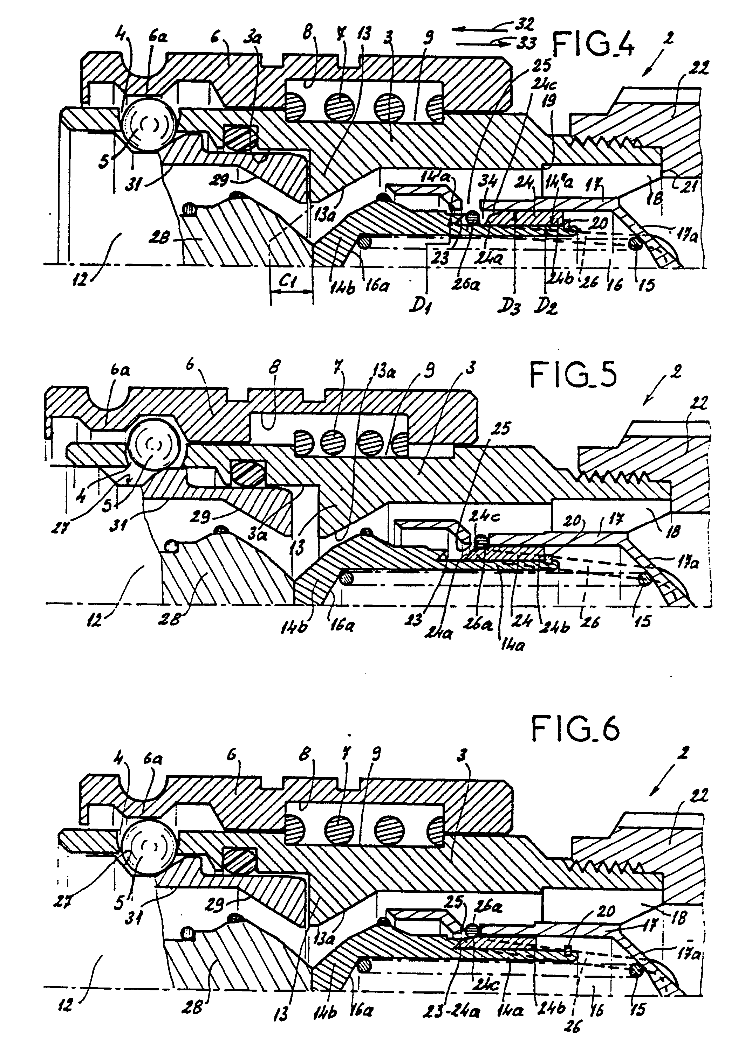

Le manchon cylindrique 17 servant à loger et guider la tige 14a du clapet 14 présente deux lumières traversantes 25 diamétralement opposées et orientées perpendiculairement à son axe. Ces deux lumières 25 sont destinées à autoriser le passage des deux branches latérales 26a d'un ressort 26 en forme d'agrafe. Ces deux branches latérales 26a sont destinées à constituer une butée escamotable du clapet 14 limitant normalement sa course d'ouverture à sa valeur normale en étant appuyées contre le tronçon 14"a de plus petit diamètre D2 de la tige 14a du clapet 14, juste en arrière de l'épaulement 23, comme cela est illustré sur la figure 4.

Dans l'exemple illustré sur le dessin, pour des raisons de diminution d'encombrement et, par conséquent, pour faciliter le logement de l'agrafe 26, les extrémités de ses branches latérales 26a engagées sur la tige l4a du clapet 14 sont coudées à angle droit par rapport au corps de l'agrafe 26 qui, de ce fait, peut être appliquée contre la face cylindrique externe du manchon 17.

Sur le dessin, on a représenté uniquement l'embout d'assemblage de l'élément mâle 12 de ce coupleur. Cet élément mâle comporte, de façon connue en soi, une gorge annulaire 27 destinée à recevoir, après son engagement dans l'alésage 3a de l'élément femelle 2, les billes de verrouillage 5, l'engagement de l'embout mâle 12 étant rendu possible par le déplacement de la douille mobile 6 dans un sens ou dans l'autre jusqu'à effacement de sa nervure 6a par rapport à la rangée annulaire de billes 5, comme cela est illustré sur la figure 2. Cet élément mâle 12 comporte aussi, comme l'élément femelle 2, un clapet 28 dont seule la tête est visible sur le dessin mais qui est normalement appliqué par un ressort, non visible, en appui étanche contre son siège 29 ménagé à l'extrémité de l'alésage 31 de l'embout de cet élément mâle 12.

L'objectif visé par le coupleur de l'invention est de permettre l'accouplement des deux éléments femelle 2 et mâle 12 et le fonctionnement correct de ce coupleur, qu'il subsiste ou non une pression résiduelle du côté du circuit d'utilisation, c'est-à-dire du côté de l'élément mâle 12 de ce coupleur.

On conçoit aisément qu'une telle pression résiduelle peut éventuellement, si elle est importante, s'opposer au soulèvement du clapet 28 par rapport à son siège 29. Pour permettre la réalisation de l'accouplement malgré une telle pression résiduelle dans le circuit d'utilisation, il est prévu, dans ce coupleur et de façon connue en soi, la possibilité pour le clapet 14 de l'élément femelle 2, d'effectuer une course double de celle nécessaire à son ouverture normale. La course nécessaire à son ouverture normale correspond à celle effectuée entre les positions qu'elle occupe sur les figures 1 et 4 et qui est illustrée sur la figure 4 en étant désignée par la référence C1.

Normalement, le fluide sous pression circule dans le sens illustré par la flèche 32, c'est-à-dire en s'écoulant depuis l'élément femelle 2 en direction de l'élément mâle 12. Cependant, dans certains modes d'utilisation et, notamment, si ce coupleur est connecté à un distributeur, le sens de circulation du fluide peut être inversé et s'établir dans le sens illustré par la flèche 33. Pour éviter que, dans un sens ou dans l'autre, la circulation du fluide ne puisse provoquer un déplacement des clapets 14 et 28 dans le même sens et, par conséquent, perturber le fonctionnement de l'installation, il est indispensable qu'à chaque clapet 14 et 28 soit associé une butée limitant sa course d'ouverture à la valeur normale telle qu'illustrée sur la figure 4. Pour cette raison, comme le montre cette figure, les branches latérales 26a du ressort en forme d'agrafe 26 et constituant la butée fin de course d'ouverture du clapet 14 de l'élément femelle 2 sont, dans cette position d'ouverture normale de ce clapet 14, situées juste en arrière de l'épaulement 23 de la tige 14a de ce clapet 14.

Or, il a été dit précédemment que, pour permettre l'accouplement des éléments 2 et 12 de ce coupleur malgré l'existence éventuelle d'une pression résiduelle dans le circuit d'utilisation, il est indispensable que le clapet 14 de l'élément femelle 2 puisse effectuer une course double de sa course C1 nécessaire à son ouverture normale. Plus exactement, ce clapet 14 doit pouvoir effectuer une course égale à la somme des courses d'ouverture normale des clapets 14 et 28.

Grâce à cette disposition, l'accouplement peut être réalisé comme illustré sur la figure 3 qui montre les billes 5 engagées dans la gorge 27 de l'embout de l'élément mâle 12, sans que le clapet 28 de cet élément n'ait été soulevé de son siège 29. Cet accouplement est rendu possible par le caractère escamotable de la butée du clapet 14 constituée par les branches 26a du ressort en forme d'agrafe 26.

Le fonctionnement de la butée escamotable 26 du clapet 14 lors de l'accouplement des éléments femelle 2 et mâle 12 de ce coupleur est le suivant.

Avant l'accouplement, c'est-à-dire lorsque tous ses organes sont au repos, le clapet 14 de l'élément femelle 2 est en position de fermeture et les branches 26a de l'agrafe 26 enserrent entre elles la bague coulissante 24 de sa tige 14a en prenant appui sur le segment cylindrique 24b de cette bague 24 dont l'extrémité postérieure est elle-même en appui contre la collerette 20 de l'extrémité postérieure de la tige 14a du clapet 14.

Lors de l'engagement de l'embout de l'élément mâle 12 dans l'alésage 3a de l'élément femelle 2 et s'il reste, dans le circuit d'utilisation, une pression résiduelle apte à s'opposer au soulèvement du clapet 28 de cet élément mâle 12, en prenant appui contre le clapet 14, le clapet 28 provoque son recul dans le sens de la flèche 33 jusque dans la position illustrée sur la figure 3. Au cours de ce recul, le serrage radial de la bague 24 par les branches latérales 26a de l'agrafe 26 en assure la retenue axiale, de sorte que la bague 24 est maintenue en position, malgré le recul de la tige du clapet 14 jusqu'à ce que l'épaulement 23 de cette dernière soit engagé sur le segment tronconique 24a de la bague 24, comme illustré sur la figure 2.

Il va de soi que la poursuite du recul, dans le sens de la flèche 33, du clapet 14 entraîne également le recul de la bague 24 dans le même sens jusque dans la position illustrée sur la figure 3. Au cours de ce recul, la bague 24 glisse entre les branches 26a de l'agrafe 26 jusqu'à ce que le tronçon 14'a de la tige 14 soit lui-même engagé entre les branches 26a de l'agrafe 26, comme illustré sur la figure 3.

On peut constater, en examinant la figure 2, que le segment tronconique 24c de la bague 24 procure une solution de continuité entre cette dernière et le tronçon 14'a de la tige 14a du clapet 14. L'élément mâle 12 du coupleur étant alors verrouillé dans cet élément femelle 2, il est alors possible d'ouvrir le circuit d'alimentation de manière à établir la circulation du fluide dans le sens de la flèche 32. Naturellement, la pression du fluide pénétrant dans l'élément femelle 2 de ce coupleur, qui est évidemment supérieure à la pression résiduelle régnant dans le circuit d'utilisation, va provoquer inévitablement le soulèvement du clapet 28 et, par conséquent, le déplacement des clapets 14 et 28 dans le sens de circulation du fluide, c'est-à-dire celui illustré par la flèche 32.

La butée associée au clapet 28 va limiter le déplacement de ce dernier, dans le sens de la flèche 32, à sa position d'ouverture normale illustrée sur la figure 4. Le clapet 14 sera donc arrêté dans sa progression par la butée limitant la course d'ouverture du clapet 28. Or, au cours de cette course du clapet 14 dans le sens de la flèche 32, depuis sa position illustrée par la figure 3 jusqu'à celle illustrée par la figure 4, rien ne provoque l'entraînement, dans le même sens, de la bague 24 tant que la collerette 20 de l'extrémité postérieure de la tige 14a du clapet 14 n'est pas venue au contact de l'extrémité postérieure de la bague 24. Il en résulte donc que la bague 24 a tendance à demeurer dans la position qu'elle occupe sur la figure 3, de sorte qu'est alors créée, entre l'épaulement 23 et l'extrémité tronconique 24a de la bague 24, une gorge annulaire 34 dans laquelle peuvent s'engager les branches latérales 26a de l'agrafe 26, aussitôt après le passage de l'épaulement 23. Le coupleur se trouve alors en position d'utilisation telle qu'illustrée sur la figure 4, position dans laquelle les deux clapets 14 et 28 sont en position d'ouverture normale, en appui arrière centre leur butée de limitation de course d'ouverture. Le sens de circulation du fluide à l'intérieur du coupleur peut donc être inversé sans aucun inconvénient et sans avoir pour incidence de modifier en quoi que ce soit la position des clapets 14 et 28.

Pour désaccoupler les deux éléments mâle 12 et femelle 2 de ce coupleur, il suffit de déplacer axialement la bague extérieure mobile 6 dans un sens ou dans l'autre jusqu'à effacement de sa nervure 6a par rapport à la rangée des billes de verrouillage 5, comme illustré sur la figure 5. Le retrait de l'embout de l'élément mâle 12 libère donc de toute contrainte le clapet 14 de l'élément femelle 2 qui, sous l'action de son ressort de rappel 15, est ramené dans sa position de fermeture par déplacement dans le sens de la flèche 32. Au cours de ce déplacement du clapet 14, le segment tronconique 24a de la bague 24 s'engage sous les branches latérales 26a de l'agrafe 26 et les écarte l'une de l'autre, autorisant ainsi la poursuite de la course de fermeture du clapet 14. Ceci explique les raisons de la présence du segment tronconique 24a de la bague 24.

La figure 6 illustre le principe de fonctionnement de ce coupleur dans le cas où, lors de l'accouplement de ses éléments mâle 12 et femelle 2, il ne subiste aucune pression résiduelle dans le circuit d'utilisation. Il est évident que, dans ces circonstances, lors de l'engagement de l'embout de l'élément mâle 12 dans l'alésage 3a de l'élément femelle 2, les deux clapets 28 et 14 se soulèvent mutuellement jusqu'à être dans leur position normale d'ouverture telle qu'illustrée sur la figure 6. Or, au début de cet engagement, comme le montre la figure 1, les branches latérales 26a de l'agrafe 26, en appui contre le segment cylindrique 24b de la bague 24, ont tendance à la retenir dans la position qu'elle occupe avant l'accouplement et cela, malgré le recul de la tige 14a du clapet 14 qui, de ce fait, glisse sans l'entraîner dans l'alésage de la bague 24. Cependant, la retenue de la bague 24 par les branches latérales 26a de l'agrafe 26 n'est assurée que jusqu'à ce que l'épaulement 23 soit engagé sur son segment tronconique 24a. A partir de cet engagement, la bague 24 est donc entraînée dans le sens de la flèche 33 et cet entraînement est assuré jusqu'à ce que le clapet 14 ait effectué sa course d'ouverture normale C1 telle qu' illustrée sur les figures 4 et 6. Cependant, dans l'exemple illustré sur la figure 6, cette position est obtenue sans passage préalable du clapet 14 par sa position correspondant à sa course double d'ouverture. Il en résulte donc qu'aucune gorge n'a été créée entre l'épaulement 23 et la bague 24, comme dans l'exemple de la figure 4, mais que les branches latérales 26a de l'agrafe 26 sont en appui contre le segment tronconique 24c de la bague 24.

La pression exercée par les branches latérales 26a de l'agrafe 26 radialement sur ce segment tronconique 24c a pour effet de chasser la bague 24 dans le sens de la flèche 33, c'est-à-dire en direction de la collerette 20 et, par conséquent, de permettre la création de la gorge 34 et la chute des branches latérales 26a de l'agrafe 26 sur le tronçon 14″a de la tige 14a du clapet 14 derrière l'épaulement 23. Ceci explique donc les raisons de la présence de ce segment tronconique 24c sur la bague 24.

Ce coupleur présente donc l'avantage de fonctionner parfaitement quelles que soient les conditions d'utilisation dans lesquelles l'accouplement des éléments mâle et femelle est réalisé.

## Revendications

1. Coupleur à clapets à douille extérieure mobile, du type comportant deux éléments mâle (12) et femelle (2) dont chacun possède un clapet (28, 14), dont l'élément mâle (12) est pourvu de moyens de raccordement à un circuit d'utilisation et dont l'élément femelle (2), qui est pourvu de moyens de raccordement à un circuit d'alimentation en fluide sous pression, porte une douille extérieure (6) axialement mobile dans les deux sens et présentant une nervure interne biconique (6a) qui, en position d'équilibre de la douille, c'est-à-dire en position de repos ou de fonctionnement du coupleur, agit radialement sur une rangée annulaire de billes de verrouillage (5) pour les maintenir dans leur position radiale la plus interne dans laquelle, étant en saillie à l'intérieur de l'alésage (3a) de l'élément femelle (2), elles sont susceptibles d'être engagées dans une gorge annulaire (27) de l'élément mâle (12) lorsque lui-même est engagé dans l'alésage (3a) de l'élément femelle (2), chaque clapet (14, 28) étant pourvu d'un ressort de rappel (15) en position de fermeture et d'une butée limitant sa course d'ouverture à la moitié de la course d'engagement de l'élément mâle (12) dans l'élément femelle (2) et dans lequel la butée associée au clapet (14) de l'élément femelle (2), c'est-à-dire situé du côté de l'alimentation, est agencée de manière à, d'une part, s'escamoter automatiquement lors du couplage pour lui permettre d'effectuer une course d'ouverture égale au double de sa course normale (C1) et, d'autre part, à être automatiquement ramenée en position active lors de l'ouverture du circuit d'alimentation, après verrouillage de l'élément mâle (12) dans l'élément femelle (2), la tige (14a) du clapet (14) de l'élément femelle (2), c'est-à-dire situé du côté de l'alimentation, présentant, du côté de son extrémité libre et au-delà d'un premier tronçon (14′a) dont la longueur correspond à sa course normale d'ouverture (C1), un second tronçon (14″a) de plus petit diamètre (D2) que le diamètre (D1) du premier, limité, du côté de la tête (14b) du clapet (14), par un épaulement (23) destiné à constituer le cran d'appui contre la butée escamotable en position active et, de l'autre, par une collerette (20), sur lequel est montée une bague coulissante (24) mobile axialement entre l'épaulement (23) et la collerette (20) et dont la longueur est sensiblement égale à la course normale (C1) d'ouverture de ce clapet augmentée de la longueur de la bague coulissante (24), tandis que la butée escamotable est constituée par un organe constamment poussé radialement en direction de la tige (14a) du clapet (14) par des moyens à ressort et qui, en position de fermeture du clapet (14), est en appui contre la bague (24), elle-même en appui contre la collerette (20), **caractérisé en ce que** la butée escamotable associée au clapet (14) de l'élément femelle (2), c'est-à-dire situé du côté de l'alimentation, est constituée par un ressort (26) en forme d'agrafe dont les branches (26a) sont engagées sur la tige (14a) du clapet (14) de manière à la serrer constamment entre deux zones diamétralement opposées tandis que la bague coulissante (24) présente, à son extrémité tournée du côté de la collerette (20), un segment cylindrique (24b) de diamètre (D3) supérieur à celui (D1) du premier tronçon (14′a) de la tige (14a) du clapet (14) et entre son extrémité (24a) destinée à entrer en contact avec l'épaulement (23) de la tige (14a) et ce segment cylindrique (24b), un segment tronconique (24c) dont le petit diamètre est égal au diamètre (D1) du premier tronçon (14′a) de la tige (14a) et qui est destiné à être situé entre les branches (26a) de l'agrafe (26) lorsque la bague (24) est en appui contre l'épaulement (23) de la tige (14a) du clapet (14) et que ce dernier est en position normale d'ouverture, tandis que le segment cylindrique (24b) de la bague (24) est destiné à être situé entre les branches (26a) de l'agrafe (26) lorsque la bague coulissante (24) est en appui contre la collerette (20) de la tige (14a) du clapet (14) et que ce dernier est en position de fermeture.

2. Coupleur selon la revendication 1, caractérisé en ce que le segment (24a) de l'extrémité de la bague (24) situé du côté de l'épaulement (23) de la tige (14a) du clapet (14) est conformé en tronc de cône mâle et l'épaulement (23) est conformé en tronc de cône femelle de profil complémentaire du tronc de cône mâle (24a) de manière à pouvoir l'épouser parfaitement.

3. Coupleur à clapet selon la revendication 1 ou 2, caractérisé en ce que la tige (14a) du clapet (14) de l'élément femelle (2), c'est-à-dire situé du côté de l'alimentation, et sa bague coulissante (24) sont montées coulissantes axialement dans un manchon fixe (17) solidaire du corps (3) du coupleur et présentant, à l'emplacement prévu pour les branches (26a) de l'agrafe (26), deux lumières traversantes (25) diamétralement opposées, la liaison rigide entre ce manchon (17) et le corps (3) du coupleur étant assurée par un couronne d'ailettes radiales (18) entre lesquelles le fluide sous pression peut librement circuler.

## Ansprüche

1. Kupplung mit Ventilen und äußerer Schiebehülse, mit einem Einsteckelement (12) und einem Aufnahmeelement (2), von denen jedes ein Ventilglied (28, 14) besitzt, wobei das Einsteckelement (12) mit Mitteln zum Anschluß an einen Verbraucherkreis versehen ist und das mit Mitteln zum Anschluß an einen Versorgungskreis zur Versorgung mit unter Druck stehendem Fluid versehene Aufnahmeelement (2) eine äußere Schiebehülse (6) trägt, die axial in beide Richtungen verschiebbar ist und einen inneren doppelkonischen Bund (6a) aufweist, der in der Gleichgewichtslage der Schiebehülse, d.h. in der Ruhestellung oder In der Arbeitsstellung der Kupplung, radial auf eine ringförmige Reihe von Riegelkugeln (5) einwirkt, um diese in ihrer innersten radialen Position zu halten, in der sie in das Innere der Bohrung (3a) des Aufnahmeelements (2) vorstehen und in eine ringförmige Vertiefung (27) des Einsteckelements (12) eingreifen können, wenn dieses selbst in der Bohrung (3a) des Aufnahmeelements (2) eingesteckt ist wobei jedes Ventilglied (14, 28) mit einer Rückstellfeder (15) für die Schließposition und mit einem seinen Öffnungshub auf der Hälfte der Einsteckbewegung des Einsteckelements (12) in das Aufnahmeelement (2) begrenzenden Anschlag versehen ist und in dem der mit dem Ventilglied (14) des Aufnahmeelements (2) verbundene, d.h. auf der Versorgungsseite angeordnete Anschlag so angeordnet ist, daß er sich zum einen automatisch bei der Kopplung bewegt, um hierdurch eine Öffnungsbewegung zu bewirken, die dem doppelten der normalen Bewegung (C1) entspricht, und daß er zum anderen automatisch in die aktive Position bei der Öffnung des Versorgungskreises nach der Verriegelung des Einsteckelements (12) im Aufnahmeelement (2) zurückgeführt wird, wobei der Schaft (14a) des Ventilglieds (14) des Aufnahmeelements (2), der nämlich versorgungsseitig angeordnet ist, von der Seite seines freien Endes her und jenseits eines ersten Bereichs (14'a), dessen Länge der normalen Öffnungsbewegung (C1) entspricht, einen zweiten Bereich (14"a) mit kleinerem Durchmesser (D2) als der Durchmesser (D1) des ersten aufweist, der vom Kopfbereich (14b) des Ventilglieds (14) her durch einen einen Abstützeinschnitt für den in die aktive Position bewegbaren Anschlag bildenden Absatz (23) und andererseits durch einen Bund (20) begrenzt wird, auf dem ein verschiebbarer Ring (24) axial zwischen dem Absatz (23) und dem Bund (20) bewegbar montiert ist und dessen Länge genau der der normalen Öffnungsbewegung (C1) dieses Ventilglieds vergrößert um die Länge des verschiebbaren Rings (24) entspricht, während der bewegbare Anschlag durch ein ständig durch Federmittel radial in Richtung zum Schaft (14a) des Ventilglieds (14) gedrücktes Organ gebildet wird und in der Schließposition des Ventilglieds (14) am Ring (24) anliegt, der seinerseits am Bund (20) anliegt, dadurch gekennzeichnet, daß der bewegbare, mit dem Ventilglied (14) des Aufnahmeelements (2) verbundene, d.h. auf der Versorgungsseite angeordnete Anschlag durch eine spangenförmige Feder (26) gebildet wird, deren Arme (26a) über den Schaft (14a) des Ventilglieds (14) geführt sind, um ihn ständig zwischen zwei diametral gegenüberstehenden Zonen einzuklemmen, während der verschiebbare Ring (24) von seinem zur Seite des Bundes (20) weisenden Ende her einen zylindrischen Bereich (24b) mit einem größeren Durchmesser (D3) als der (D1) des ersten Bereichs (14'a) des Schaftes (14a) des Ventilglieds (14) sowie zwischen seinem Endbereich (24a), der dafür vorgesehen ist, um in Kontakt mit dem Absatz (23) des Schaftes (14a) zu treten, und diesem zylindrischen Bereich (24b) einen kegelstumpfartigen Bereich (24c) aufweist, dessen kleiner Durchmesser dem Durchmesser (D1) des ersten Bereichs (14'a) des Schaftes (14a) entspricht, und der dafür vorgesehen ist, zwischen den Armen (26a) der Spange (26) zu liegen, wenn der Ring (24) am Absatz (23) des Schaftes (14a) des Ventilglieds (14) anliegt, und daß dieses letztere sich dabei in der normalen Öffnungsposition befindet, während der zylindrische Bereich (24b) des Ringes (14) dafür vorgesehen ist, zwischen den Armen (26a) der Spange (26) zu liegen, wenn der verschiebbare Ring (24) am Bund (20) des Schaftes (14a) des Ventilglieds (14) anliegt, und daß dieses letztere sich dabei in der Schließposition befindet.

2. Kupplung nach Anspruch 1, dadurch gekennzeichnet, daß der Bereich (24a) des Endes des Ringes (24), der auf der Seite des Absatzes (23) des Schaftes (14a) des Ventilglieds (14) angeordnet ist, vorspringend kegelstumpfförmig ausgebildet ist, und der Absatz (23) rückspringend kegelstumpfförmig mit komplementärem Profil zum vorspringenden Kegelstumpf (24a) ausgebildet ist, um sich vollständig an diesen anschmiegen zu können.

3. Kupplung nach Anspruch 1 oder 2, dadurch gekennzeichnet, daß der Schaft (14a) des Ventilglieds (14) des Aufnahmeelements (2), der nämlich versorgungsseitig angeordnet ist, und sein verschiebbarer Ring (24) axial verschiebbar in einer fest am Gehäuse (3) der Kupplung fixierten Hülse (17) montiert sind und an der für die Arme (26a) der Spange (26) vorgesehenen Stelle zwei durchgehende, diametral gegenüberliegende Öffnungen (25) bilden, wobei die feste Verbindung zwischen dieser Hülse (17) und dem Gehäuse (3) der Kupplung durch einen Kranz radialer Flügel (18) gewährleistet wird, zwischen denen das unter Druck stehende Fluid frei zirkulieren kann.

### Claims

1. A. valve coupling having a movable external sleeve, of the type having two elements, a male element (12) and a female element (2), each of which has a valve (28, 14), the male element (12) being provided with means for coupling to a working circuit and the female element (2), which is provided with means for coupling to a pressure fluid supply circuit, has an external sleeve (6) axially movable in both directions and having an internal biconical rib (6a) which, in the balance position of the sleeve, i.e. in the rest or operating position of the coupling, acts radially on an annular row of locking balls (5) to hold them in their innermost position in which, projecting within the bore (3a) of the female element (2), they are able to be engaged in an annular groove (27) of the male element (12) when it is itself engaged in the bore (3a) of the female element (2), each valve (14, 28) being provided with a spring (15) for returning it to the closed position and an abutment limiting its opening travel to half the engagement travel of the male element (12) in the female element (2) and in which the abutment associated with the valve (14) of the female element (2), i.e. located at the supply side, is arranged so as, on the one hand, to retract automatically when coupling occurs to enable it to effect an opening travel equal to twice its normal travel (C1) and, on the other hand, to be returned automatically to the active position when the supply circuit opens after locking of the male element (12) in the female element (2), the rod (14a) of the valve (14) of the female element (2), i.e. located at the supply side, having, at the side of its free end and beyond a first section (14'a) of which the length corresponds to its normal opening travel (C1), a second section (14"a) of smaller diameter (D2) than the diameter (D1) of the first, limited, at the side of the head (14b) of the valve (14), by a shoulder (23) intended to constitute the notch for bearing against the retractable abutment in the active position and, at the other, by a flange (20), on which is mounted a slidable ring (24) axially movable between the shoulder (23) and the flange (20) and of which the length is substitially equal to the normal opening travel (C1) of this valve increased by the length by the slidable rig (24), whilst the retractable abutment is constituted by an element which is constantly pushed radially in the direction of the rod (14a) of the valve (14) by spring means and which, in the closed position of the valve (14), bears against the ring (24), which itself bears against the flange (20), characterised in that the retractable abutment associated with the valve (14) of the female element (2), i.e. located at the supply side, is constituted by a spring (26) in the shape of a hook of which the arms (26a) are engaged on the rod (14a) of the valve (14) so as constantly to grip it between two diametrically opposed zones, whilst the slidable ring (24) has, at its end facing towards the slidable (20), a cylindrical segment (24b) of diameter (D3) greater than that (D1) of the first section (14'a) of the rod (14a) of the valve (14) and between its end (24a) intended to come into contact with the shoulder (23) of the rod (14a) and this cylindrical sement (24b), a truncated cone-shaped segment (24c) of which the small diameter is in equal to the diameter (D1) of the first section (14'a) of the rod (14a) and which is intented to be located between the arms (26a) of the hook (26) when the ring (24) bears against the shoulder (23) of the rod (14a) of the valve (14) and when this latter is in the normal open position, whilst the cylindrical segment (24b) of the ring (24) is intended to be located between the arms (26a) of the hook (26) when the slidable ring (24) bears against the flange (20) of the rod (14a) of the valve (14) and this latter is in the closed position.

2. A coupling according to Claim 1, characterised in that the segment (24a) of the end of the ring (24) located at the side of the shoulder (23) of the rod (14a) of the valve (14) is shaped into a male frustum of a cone and the shoulder (23) is shaped into a female frustum of a cone having a profile complementay to that of the male frustum of a cone (24a) so as to be able perfectly to match it.

3. A valve coupling according to Claim 1 or Claim 2, characterised in that the rod (14a) of the valve (14) of the female element (2), i.e. located at the supply side, and its slidable ring (24) are mounted so as to slide axially in a fixed sleeve (17) rididly connected to the body (3) of the coupling and having, at the location provided for the arms (26a) of the hook (26), two diametrically opposed through-slots (25), the rigid connection between this sleeve (17) and the body (3) of the coupling being ensured by a radially bladed crown wheel (18), between the blades of which the pressure fluid can flow freely.

FIG.1

FIG.2

FIG.3

EP 0 338 942 B1

FIG.4

FIG.5

FIG.6

11